# EUROPÄISCHE PATENTANMELDUNG

(11) **EP 3 127 641 A1**
(43) Veröffentlichungstag der Anmeldung: **08.02.2017**
(21) Anmeldenummer: 15179766.9
(22) Anmeldetag: 05.08.2015
(51) Int. Cl.: B23D 59/02, B28D 7/02, B23Q 11/10, B23B 51/04

(54) **SPÜLKOPFANORDNUNG UND HANDWERKZEUGMASCHINE MIT SPÜLKOPFANORDNUNG**

(71) Anmelder: HILTI Aktiengesellschaft, 9494 Schaan (LI)
(72) Erfinder: Dr. Günther, Joachim, 86916 Kaufering (DE); Härtl, Hubert, 88316 Isny (DE)

(57) **Zusammenfassung**

Spülkopfanordnung (50) für eine Handwerkzeugmaschine (100), insbesondere für eine Kernbohrmaschine, mit einem Spülkopf (51) zum Einleiten einer Spülflüssigkeit (W) in ein durch die Handwerkzeugmaschine (100) anzutreibendes Werkzeug, insbesondere in eine Bohrkrone (150), wobei die Spülkopfanordnung (50) eine dem Spülkopf (50) zugeordnete Förderpumpe (53) zum Fördern der Spülflüssigkeit (W) aus einem Spülflüssigkeitsbehälter (200) in den Spülkopf (51) aufweist, wobei die Förderpumpe (53) durch eine Antriebswelle (77) der Handwerkzeugmaschine (100) antreibbar ist, wenn die Spülkopfanordnung (50) mit der Handwerkzeugmaschine (100) gekoppelt ist.

## Beschreibung

Die vorliegende Erfindung betrifft eine Spülkopfanordnung für eine Handwerkzeugmaschine, insbesondere für eine Kernbohrmaschine, mit einem Spülkopf zum Einleiten einer Spülflüssigkeit in ein durch die Handwerkzeugmaschine anzutreibendes Werkzeug, insbesondere in eine Bohrkrone. Derartige Spülkopfanordnungen sind grundsätzlich aus dem Stand der Technik bekannt. Sie dienen zum Einleiten einer Spülflüssigkeit wie beispielsweise Wasser in ein Werkzeug, beispielsweise in Form einer Bohrkrone, insbesondere in Form einer Diamantbohrkrone. Die Spülflüssigkeit dient dabei zum einen zum Kühlen der Bohrkrone, zum anderen zum Abtransport von Bohrschlamm.

Es ist Aufgabe der vorliegenden Erfindung, eine Spülkopfanordnung sowie eine Handwerkzeugmaschine bereitzustellen, die einen vereinfachten Spülbetrieb ermöglichen.

Bezüglich der Spülkopfanordnung wird die Aufgabe dadurch gelöst, dass die Spülkopfanordnung eine dem Spülkopf zugeordnete Förderpumpe zum Fördern der Spülflüssigkeit aus einem Spülflüssigkeitsbehälter in den Spülkopf aufweist, wobei die Förderpumpe durch eine Antriebswelle der Handwerkzeugmaschine antreibbar ist, wenn die Spülkopfanordnung mit der Handwerkzeugmaschine gekoppelt ist.

Die Erfindung schließt die Erkenntnis ein, dass Spülkopfanordnungen des Standes der Technik typischerweise an einen Hauswasseranschluss o.ä. angeschlossen werden müssen, um mit einer Spülflüssigkeit beispielsweise in Form von Wasser versorgt werden zu können. Je nach Baustellensituation muss dabei ein ausreichend langer Schlauch vom Hauswasseranschluss zur Bohrstelle gelegt werden. Nachteilig bei vorbekannten Spülkopfanordnungen ist zudem, dass die zum Kühlen beziehungsweise zum Spülen erforderliche Spülflüssigkeitsdurchflussmenge über ein Ventil reguliert werden muss. Hinzu kommt, dass vor einem Bohrvorgang eine Spülflüssigkeitszufuhr eingeschaltet und nach dem Bohrvorgang wieder abgeschaltet werden muss.

Des Weiteren schließt die Erfindung die Erkenntnis ein, dass, falls kein Hauswasseranschluss an der Bohrstelle vorhanden ist, die Zufuhr der Spülflüssigkeit typischerweise über ein Aggregat zur Spülflüssigkeitsversorgung, wie beispielsweise eine Druckflasche, bereitgestellt werden muss. Nachteiligerweise muss dieses Aggregat vor dem Bohren an die Handwerkzeugmaschine angeschlossen und, wie bereits mit Bezug auf den Hauswasseranschluss ausgeführt, eingeschaltet und die Spülflüssigkeitsdurchflussmenge manuell reguliert werden. Dies hat den Nachteil, dass, falls vergessen wird das Aggregat einzuschalten oder den Wasserfluss freizugeben, ein Trockenbohren ohne erforderliches Spülen beziehungsweise Kühlen erfolgt. Dies führt zu einem erhöhten Verschleiß der Bohrkrone.

In Abkehr zum Stand der Technik ist erfindungsgemäß von der Spülkopfanordnung eine Förderpumpe umfasst, die durch eine Antriebswelle der Handwerkzeugmaschine antreibbar ausgebildet ist. Vorteilhafterweise ist es somit nicht mehr notwendig, die SpülflüssigkeitsVersorgung separat von einer Betätigung der Handwerkzeugmaschine einzuschalten beziehungsweise zu regulieren. Sobald die Handwerkzeugmaschine eingeschaltet wird und deren Antriebswelle in Rotation gerät, fördert die Förderpumpe Spülflüssigkeit durch den Spülkopf in ein durch die Handwerkzeugmaschine anzutreibendes Werkzeug, insbesondere in eine Bohrkrone. Dadurch wird eine Fehlbedienung ausgeschlossen, wodurch die Spülkopfanordnung besonders sicher betreibbar ist und ein vereinfachter Spülbetrieb ermöglicht wird.

In einer besonders bevorzugten Ausgestaltung ist die Spülkopfanordnung als Modul zum Aufsetzen auf die Antriebswelle ausgebildet. In aufgesetztem Zustand ist die Spülkopfanordnung mit der Handwerkzeugmaschine gekoppelt, sodass die Förderpumpe der Spülkopfanordnung durch die Antriebswelle der Handwerkzeugmaschine betreibbar ist. Die Antriebswelle kann zumindest abschnittsweise durch die Förderpumpe verlaufen, wenn die Spülkopfanordnung mit der Handwerkzeugmaschine gekoppelt ist. Bevorzugt weist die Spülkopfanordnung ein Befestigungsmittel auf, mittels dem die Spülkopfanordnung an einem Gehäuse der Handwerkzeugmaschine arretierbar ist. Das Befestigungsmittel kann beispielsweise in Form eines handbetätigbaren Klemmrings oder Ähnlichem bereitgestellt sein.

Um eine besonders robuste Spülkopfanordnung bereitzustellen, kann die Förderpumpe in den Spülkopf integriert sein. Dies hat für einen Benutzer den Vorteil, dass die Spülkopfanordnung wie gewohnt an dem Gehäuse der Handwerkzeugmaschine angebracht werden kann.

Bevorzugt sind die Förderpumpe und der Spülkopf über eine Spülflüssigkeitsleitung verbunden. Die den Spülkopf mit der Förderpumpe verbindende Spülflüssigkeitsleitung kann in die Spülkopfanordnung integriert sein. Somit ist die Anordnung besonders robust für den Baustelleneinsatz.

Es hat sich als vorteilhaft herausgestellt, wenn die Förderpumpe als Zahnradpumpe bereitgestellt ist. Die Zahnradpumpe kann zwei Zahnräder, insbesondere genau zwei Zahnräder aufweisen, von denen eines, insbesondere genau eines, durch die Antriebswelle der Handwerkzeugmaschine antreibbar ist bzw. im Betrieb der Handwerkzeugmaschine angetrieben wird. Das Zahnrad der Förderpumpe kann beispielsweise eine Innenverzahnung aufweisen, die zu einer äußeren Verzahnung der Antriebswelle korrespondiert. Derart ist, wenn die Antriebswelle zumindest abschnittsweise in das Zahnrad hineinragt, dieses verdrehsicher auf der Antriebswelle angeordnet. Alternativ oder zusätzlich kann eine drehfeste Verbindung zwischen Antriebswelle und Zahnrad beispielsweise durch ein Klemmmittel erfolgen. Alternativ zu einer Bereitstellung als Zahnradpumpe, kann die Förderpumpe beispielsweise als Membranpumpe, Zahnringpumpe, Drehkolbenpumpe, Kreiskolbenpumpe oder Schlauchpumpe bereitgestellt sein. Grundsätzlich ist jede durch eine rotierende Antriebswelle betreibbare Förderpumpe geeignet.

In einer bevorzugten Ausgestaltung weist der Spülkopf eine Hohlwelle zur Aufnahme des anzutreibenden Werkzeugs, insbesondere der Bohrkrone auf. Bevorzugt weist die Hohlwelle an ihrem Umfang wenigstens eine Welleneintrittsöffnung auf, über die die Spülflüssigkeit in die Hohlwelle gelangen kann. Besonders bevorzugt ist die Hohlwelle derart im Spülkopf drehbar gelagert, dass die mittels der Förderpumpe in den Spülkopf zu fördernde Spülflüssigkeit über eine die Hohlwelle ringförmig umschließende Versorgungsöffnung in die Hohlwelle und von dort in das anzutreibende Werkzeug, insbesondere die Bohrkrone, eintreten kann. Durch die ringförmig umschließende Versorgungsöffnung kann die Spülflüssigkeit unabhängig von einer Drehlage der Hohlwelle in die Hohlwelle eintreten. Bevorzugt ist die die Hohlwelle ringförmig umschließende Versorgungsöffnung über die Spülflüssigkeitsleitung mit einem Ausgang der Förderpumpe verbunden.

Die Hohlwelle kann derart in der Spülkopfanordnung angeordnet sein, dass die Hohlwelle koaxial zu der Antriebswelle der Handwerkzeugmaschine verläuft, wenn die Spülkopfanordnung mit der Handwerkzeugmaschine gekoppelt ist. Bevorzugt sind die Antriebswelle und die Hohlwelle miteinander drehfest verbunden, wenn die Spülkopfanordnung mit der Handwerkzeugmaschine gekoppelt ist.

Es hat sich als vorteilhaft herausgestellt, wenn die Spülkopfanordnung frei von einem Durchflussregelventil ist. Ebenfalls ist es vorteilhaft, wenn die Förderpumpe ausschließlich zum mechanischen Antrieb durch die Antriebswelle ausgebildet ist. Dies begünstigt einen einfachen Aufbau der Spülkopfanordnung. Bevorzugt ist ein Spülflüssigkeitsbehälter, aus dem die Spülflüssigkeit zu fördern ist, im Wesentlichen drucklos, bezogen auf den herrschenden Umgebungsdruck.

Besonders bevorzugt ist eine Förderleistung der Förderpumpe auf eine Drehzahl der Antriebswelle der Handwerkzeugmaschine abgestimmt, so dass keine gesonderte Regulierung der Spülflüssigkeitsdurchflussmenge erforderlich ist. Bevorzugt ist die Förderpumpe ausgelegt, bei einer Drehzahl der Antriebswelle zwischen 0 und 500 U/min (Umdrehungen pro Minute), die Spülflüssigkeit mit wenigstens 1 L/min (Liter pro Minute) zu fördern. Die Spülkopfanordnung kann eine Spülflüssigkeitsdurchflussanzeige aufweisen. Kann ein Nutzer der Anzeige beispielsweise entnehmen, dass eine höhere Fördermenge von Spülflüssigkeit erforderlich ist, so kann er mit einer Erhöhung der Drehzahl der Antriebswelle der Handwerkzeugmaschine in geeignetem Maße darauf reagieren. Dies gilt selbstverständlich auch wenn keine derartige Spülflüssigkeitsdurchflussanzeige vorgesehen ist. Die Spülkopfanordnung kann eine einstellbare Getriebeübersetzung aufweisen, die ein Drehzahlverhältnis zwischen Drehzahl der Antriebswelle und Drehzahl der Förderpumpe übersetzt und/oder untersetzt. Dies ist beispielsweise vorteilhaft, wenn häufig mit unterschiedlichen Bohrkopfdurchmessern zu arbeiten ist, bei denen- jeweils bezogen auf eine gleiche Drehzahl - verschieden hohe Wärmemengen und/oder Bohrschlammmengen durch die Spülflüssigkeit abzuführen sind. Die Spülkopfanordnung kann derart ausgebildet sein, dass durch ein relatives Verdrehen der Förderpumpe und des Spülkopfes zueinander eine Getriebeübersetzung einstellbar ist. Alternativ oder zusätzlich kann eine Einstellung beispielsweise über einen Schieber o.ä. erfolgen.

Die Erfindung wird ebenfalls gelöst durch eine Handwerkzeugmaschine, insbesondere Kernbohrmaschine, die eine vorbeschriebene Spülkopfanordnung aufweist. Die erfindungsgemäße Handwerkzeugmaschine kann durch die mit Bezug auf die Spülkopfanordnung beschriebenen Merkmale weitergebildet sein.

In einer besonders bevorzugten Ausgestaltung ist die Spülkopfanordnung in ein Gehäuse der Handwerkzeugmaschine integriert. Die Förderpumpe kann mit der Antriebswelle der Handwerkzeugmaschine gekoppelt, insbesondere permanent gekoppelt sein. Alternativ kann die Förderpumpe mit der Antriebswelle der Handwerkzeugmaschine zu schaltbar gekoppelt sein.

Es hat sich als vorteilhaft herausgestellt, wenn das Gehäuse eine Befestigungsaufnahme für den Spülmittelbehälter aufweist. Die Befestigungsaufnahme für den Spülflüssigkeitsbehälter ist bevorzugt auf der Oberseite des Gehäuses angeordnet.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine schematische Darstellung eines Ausführungsbeispiels einer erfindungsgemäßen Spülkopfanordnung, die an einer Handwerkzeugmaschine angeordnet ist;
- Fig. 2: eine schematische Darstellung eines Ausführungsbeispiels einer erfindungsgemäßen Handwerkzeugmaschine in die eine Spülkopfanordnung integriert ist;
- Fig. 3: eine schematische Darstellung eines weiteren Ausführungsbeispiels einer erfindungsgemäßen Handwerkzeugmaschine;
- Fig. 4: eine schematische Darstellung eines weiteren Ausführungsbeispiels einer erfindungsgemäßen Spülkopfanordnung;
- Fig. 5: eine schematische Darstellung eines Ausführungsbeispiels einer Förderpumpe einer erfindungsgemäßen Spülkopfanordnung;
- Fig. 6: eine schematische Darstellung eines weiteren Ausführungsbeispiels einer Förderpumpe einer erfindungsgemäßen Spülkopfanordnung.

### Ausführungsbeispiele:

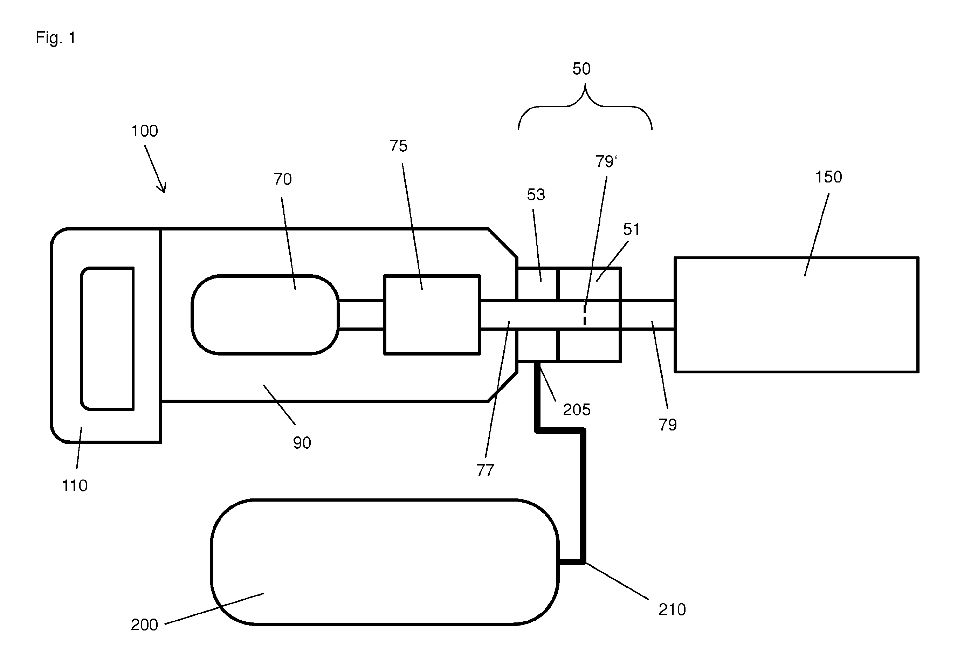

Fig. 1 zeigt eine Handwerkzeugmaschine 100 in Form einer Kernbohrmaschine. Diese weist ein Gehäuse 90 auf, in dem ein Elektromotor 70 mit nachgeschaltetem Getriebe 75 zum Betreiben einer Antriebswelle 77 der Handwerkzeugmaschine 100 angeordnet sind. Die Handwerkzeugmaschine 100 weist einen Handgriff 110 zu ihrer Handhabung auf.

An die Handwerkzeugmaschine 100 angekoppelt ist eine Spülkopfanordnung 50, die einen Spülkopf 51 zum Einleiten einer Spülflüssigkeit W in eine Bohrkrone 150 aufweist. Die Bohrkrone 150 ist durch die Handwerkzeugmaschine 100 anzutreiben. Die Spülkopfanordnung 50 weist dabei eine dem Spülkopf 51 zugeordnete Förderpumpe 53 zum Fördern der Spülflüssigkeit W aus einem Spülflüssigkeitsbehälter 200 in den Spülkopf 51 auf. Die Förderpumpe 53 ist erfindungsgemäß durch die Antriebswelle 77 der Handwerkzeugmaschine 100 antreibbar, wenn - wie in Fig. 1 dargestellt - die Spülkopfanordnung 50 mit der Handwerkzeugmaschine 100 gekoppelt ist.

Im dargestellten Ausführungsbeispiel wird die Spülflüssigkeit W aus einem drucklosen Spülflüssigkeitsbehälter 200, der über eine Versorgungsleitung 210 mit der Förderpumpe 53 verbunden ist, gefördert. Die Versorgungsleitung 210 ist an einem Spülflüssigkeitseingang 205 der Förderpumpe 53 angeschlossen.

Wie ebenfalls in Fig. 1 dargestellt ist, weist der Spülkopf 51 eine Hohlwelle 79 auf, in der die Bohrkrone 150 aufgenommen ist. Die Hohlwelle 79 ist drehbar im Spülkopf 51 gelagert, wobei die durch die Förderpumpe 53 in den Spülkopf 51 zu fördernde Spülflüssigkeit W über die Hohlwelle 79 in die Bohrkrone 150 zwecks Spülung und Kühlung führbar ist. Die Antriebswelle 77 und die Hohlwelle 79, die koaxial zueinander liegen, sind über eine Kupplung 79' drehfest miteinander verbunden.

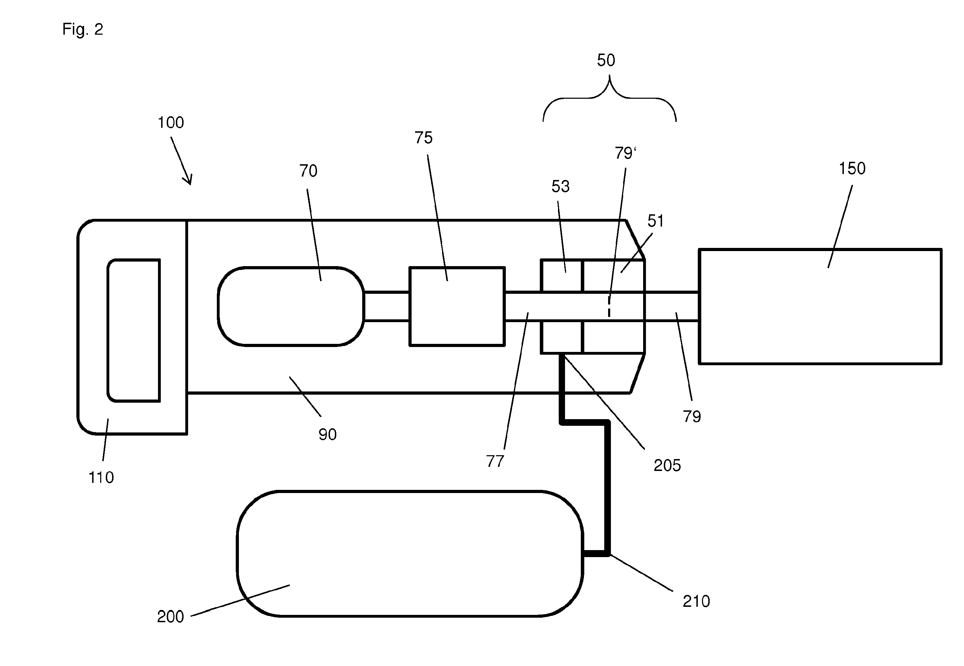

Ein erfindungsgemäße Handwerkzeugmaschine 100 in Fig. 2 weist eine Spülkopfanordnung 50 auf, die in einem Gehäuse 90 der Handwerkzeugmaschine 100 integriert ist. Dabei ist die Förderpumpe 53 mit der Antriebswelle 77 der Handwerkzeugmaschine permanent gekoppelt. Im Übrigen entspricht das in Fig. 2 dargestellte Ausführungsbeispiel dem mit Bezug auf Fig. 1 beschriebenen Ausführungsbeispiel.

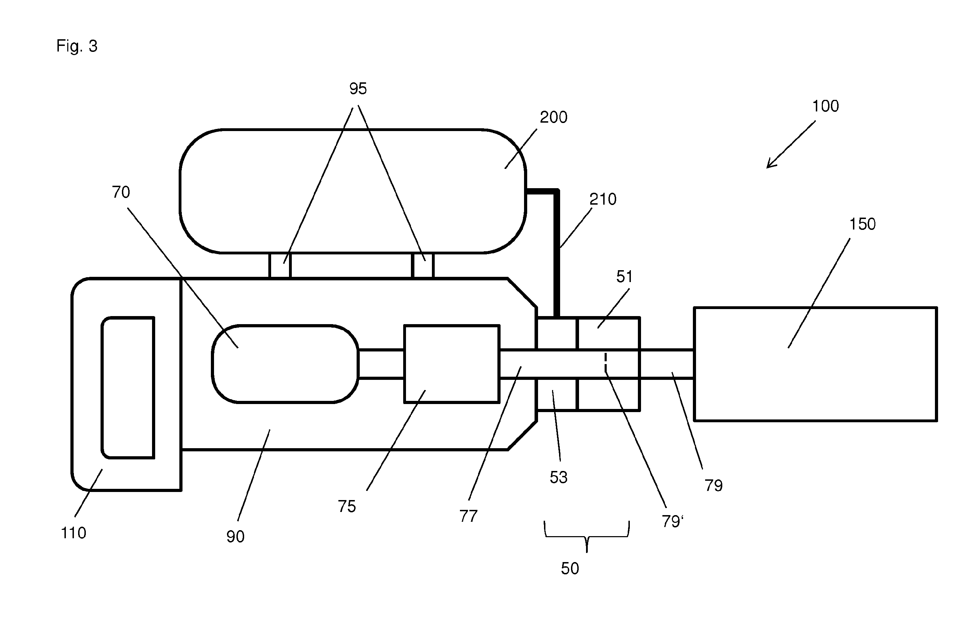

Fig. 3 zeigt ein Ausführungsbeispiel einer Handwerkzeugmaschine 100, deren Gehäuse 90 eine Befestigungsaufnahme 95 für den Spülflüssigkeitsbehälter 200 aufweist. Im vorliegend dargestellten Ausführungsbeispiel ist der drucklose Spülflüssigkeitsbehälter 200 an der Oberseite des Gehäuses 90 angeordnet. Wie bereits bei den mit Bezug auf Fig. 1 und 2 beschriebenen Ausführungsbeispielen, ist der Spülflüssigkeitsbehälter 200 über eine vorteilhafterweise kurze Versorgungsleitung 210 mit der Förderpumpe 53 der Spülkopfanordnung 50 verbunden.

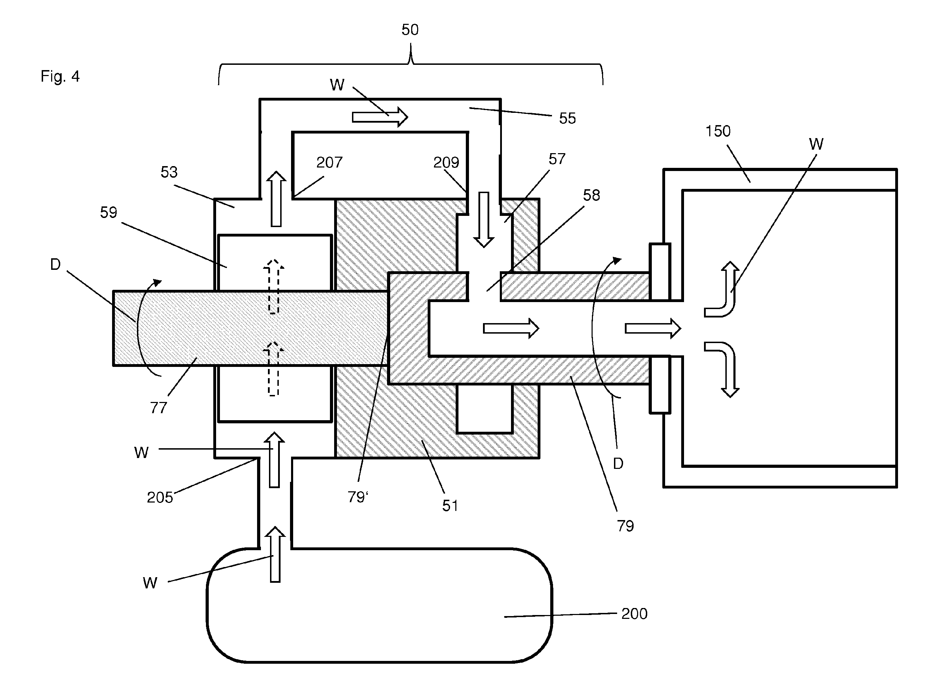

Fig. 4 zeigt eine erfindungsgemäße Spülkopfanordnung 50 im Detail. Die Antriebswelle 77 einer nicht gezeigten Handwerkzeugmaschine verläuft durch ein Zahnrad 59 einer als Zahnradpumpe bereitgestellten Förderpumpe 53. Das Zahnrad 59 ist drehfest zur Antriebswelle 77, da die Spülkopfanordnung 50 mit der Antriebswelle 77 gekoppelt ist. Eine Drehung der Antriebswelle 77 in Drehrichtung D bewirkt dementsprechend eine gleichsinnig orientierte Drehbewegung des Zahnrads 59 der Förderpumpe.

Der Spülkopf 51 in der Mitte der Fig. 4 weist eine Hohlwelle 79 auf, an der die Bohrkrone 150 angeordnet ist. Die Hohlwelle 79 ist drehbar im Spülkopf 51 gelagert, wobei die Hohlwelle 79 ringförmig von einer Versorgungsöffnung 57 umschlossen ist, über die die zu fördernde Spülflüssigkeit W in die Hohlwelle 79 und im weiteren Verlauf in die Bohrkrone 150 eintreten kann.

Wie in Fig. 4 dargestellt, sind die Antriebswelle 77 und die Hohlwelle 79, die als Abtriebswelle wirkt, drehfest über die Kupplung 79' miteinander verbunden, sodass eine Drehung der Antriebswelle 77 in Drehrichtung D eine gleichsinnige Drehung der Hohlwelle 79 in Drehrichtung D bewirkt.

Die Förderpumpe 53 weist einen Spülflüssigkeitseingang 205 und einen Spülflüssigkeitsausgang 207 auf. Der Spülflüssigkeitsausgang 207 ist über eine Spülflüssigkeitsleitung 55 mit einem Spülkopfeingang 209 des Spülkopfes 51 verbunden. Im dargestellten Ausführungsbeispiel verläuft die Spülflüssigkeitsleitung 55 außerhalb von Förderpumpe 53 und Spülkopf 51. Alternativ kann die Spülflüssigkeitsleitung 55 selbstverständlich auch innerhalb eines durch die Förderpumpe 53 und/oder den Spülkopf 51 definierten Volumens angeordnet sein.

Wird die Förderpumpe 53 über die Antriebswelle 77 angetrieben, so wird eine Spülflüssigkeit W aus dem drucklosen Spülflüssigkeitsbehälter 200 angesogen und tritt in den Spülflüssigkeitseingang 205 der Förderpumpe 53 ein. Im weiteren Verlauf tritt die Spülflüssigkeit W aus dem Spülflüssigkeitsausgang 207 der Förderpumpe 53 aus, um über die Spülflüssigkeitsleitung 55 und den Spülkopfeingang 209 in die Versorgungsöffnung 57, die die Hohlwelle 79 ringförmig umschließt, einzutreten. Von dort aus gelangt die Spülflüssigkeit W über eine Welleneintrittsöffnung 58 in die Hohlwelle 79 um im weiteren Verlauf in die Bohrkrone 150 eingeleitet zu werden.

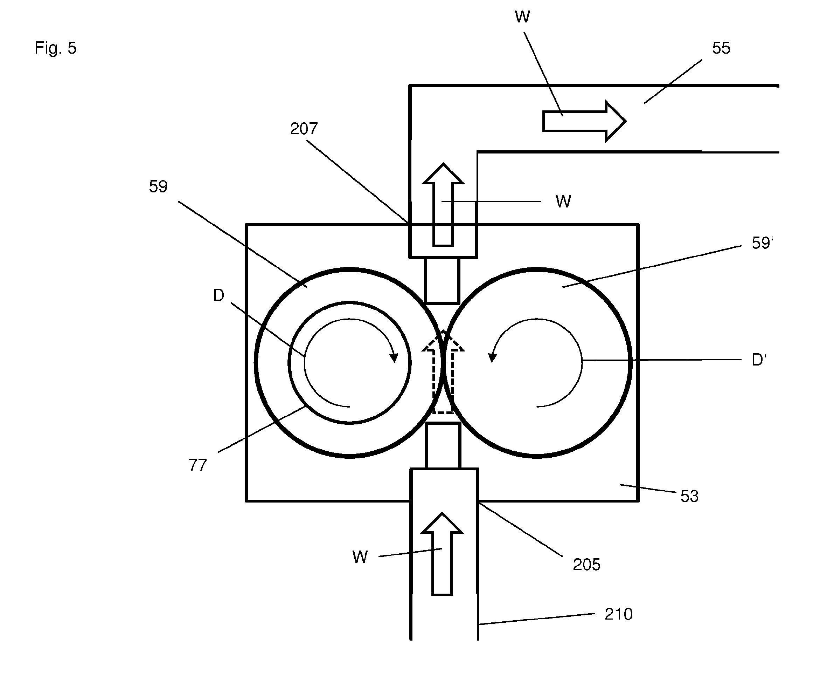

Fig. 5 zeigt eine als Zahnradpumpe bereitgestellte Förderpumpe 53 einer Spülkopfanordnung 50. Im unteren Teil der Fig. 5 ist der Spülflüssigkeitseingang 205 der Förderpumpe 53, an den die Versorgungsleitung 210 angeschlossen ist, dargestellt. Im oberen Bereich verfügt die Förderpumpe 53 über den Spülflüssigkeitsausgang 207 an dem die Spülflüssigkeitsleitung 55, die zum nicht gezeigten Spülkopf führt, angeschlossen ist.

In dem in Fig. 5 dargestellten Ausführungsbeispiel weist die Förderpumpe 53 genau ein Zahnradpaar 59, 59' auf, wobei das links im Bild dargestellte Zahnrad 59 durch die Antriebswelle 77 angetrieben wird. Durch die Verzahnung der Zahnräder 59, 59' untereinander wird, wenn ein Antrieb der Antriebswelle 77 in Drehrichtung D erfolgt, eine gegensinnige Drehung D' des zweiten Zahnrads 59' bewirkt, wodurch die Spülflüssigkeit W durch die Förderpumpe 53 hindurch gefördert wird.

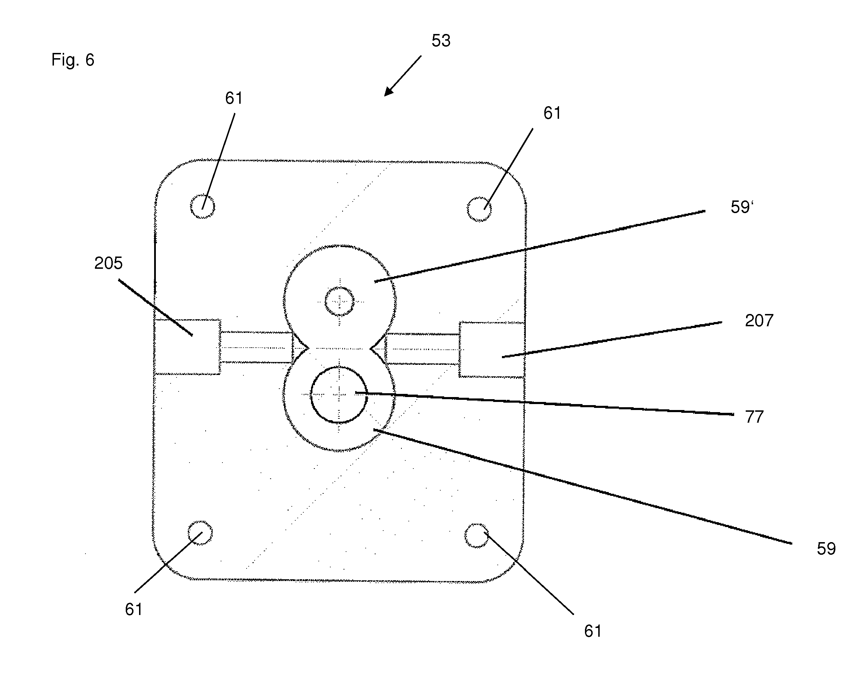

Fig. 6 zeigt ein weiteres Ausführungsbeispiel einer Förderpumpe 53, das im Wesentlichen dem mit Bezug auf Fig. 5 beschriebenen Ausführungsbeispiel entspricht. Über die vier an der Förderpumpe 53 vorgesehenen Bohrungen 61, kann die Förderpumpe 53 leicht an einen Spülkopf angekoppelt werden, wie dies beispielsweise in Fig. 4 dargestellt ist.

### Bezugszeichenliste

- 50: Spülkopfanordnung
- 51: Spülkopf
- 53: Förderpumpe
- 55: Spülflüssigkeitsleitung
- 57: Versorgungsöffnung
- 58: Welleneintrittsöffnung
- 59, 59': Zahnrad
- 61: Bohrungen
- 70: Elektromotor
- 75: Getriebe
- 77: Antriebswelle
- 79: Hohlwelle
- 79': Kupplung
- 90: Gehäuse
- 95: Befestigungsaufnahme
- 100: Handwerkzeugmaschine
- 110: Handgriff
- 150: Bohrkrone
- 200: Spülflüssigkeitsbehälter
- 205: Spülflüssigkeitseingang
- 207: Spülflüssigkeitsausgang
- 209: Spülkopfeingang
- 210: Versorgungsleitung
- D: Drehrichtung
- W: Spülflüssigkeit

## Patentansprüche

1. Spülkopfanordnung (50) für eine Handwerkzeugmaschine (100), insbesondere für eine Kernbohrmaschine, mit einem Spülkopf (51) zum Einleiten einer Spülflüssigkeit (W) in ein durch die Handwerkzeugmaschine (100) anzutreibendes Werkzeug, insbesondere in eine Bohrkrone (150),
**dadurch gekennzeichnet, dass** die Spülkopfanordnung (50) eine dem Spülkopf (51) zugeordnete Förderpumpe (53) zum Fördern der Spülflüssigkeit (W) aus einem Spülflüssigkeitsbehälter (200) in den Spülkopf (51) aufweist, wobei die Förderpumpe (53) durch eine Antriebswelle (77) der Handwerkzeugmaschine (100) antreibbar ist, wenn die Spülkopfanordnung (50) mit der Handwerkzeugmaschine (100) gekoppelt ist.

2. Spülkopfanordnung (50) nach Anspruch 1,
**dadurch gekennzeichnet, dass** die Spülkopfanordnung (50) als Modul zum Aufsetzen auf die Antriebswelle (77) ausgebildet ist, bevorzugt derart, dass die Antriebswelle (77) der Handwerkzeugmaschine (100) zumindest abschnittsweise durch die Förderpumpe (53) verläuft, wenn die Spülkopfanordnung (50) mit der Handwerkzeugmaschine (100) gekoppelt ist.

3. Spülkopfanordnung (50) nach Anspruch 1 oder 2,
**dadurch gekennzeichnet, dass** die Förderpumpe (53) in den Spülkopf (51) integriert ist und/oder eine den Förderpumpe (53) mit dem Spülkopf (51) verbindende Spülflüssigkeitsleitung (55) in die Spülkopfanordnung (50) integriert ist.

4. Spülkopfanordnung (50) nach einem der vorangehenden Ansprüche,
**dadurch gekennzeichnet, dass** die Förderpumpe (53) als Zahnradpumpe, Membranpumpe, Zahnringpumpe, Drehkolbenpumpe, Kreiskolbenpumpe oder Schlauchpumpe bereitgestellt ist.

5. Spülkopfanordnung (50) nach einem der vorangehenden Ansprüche,
**dadurch gekennzeichnet, dass** der Spülkopf (51) eine Hohlwelle (79) zur Aufnahme des anzutreibenden Werkzeugs, insbesondere der Bohrkrone (150) aufweist, wobei die Hohlwelle (79) derart im Spülkopf (51) drehbar gelagert ist, dass die mittels der Förderpumpe (53) in den Spülkopf (51) zu fördernde Spülflüssigkeit (W) über eine die Hohlwelle (79) ringförmig umschließende Versorgungsöffnung (57) in die Hohlwelle (79) und von dort in das anzutreibende Werkzeug, insbesondere die Bohrkrone (150) eintreten kann.

6. Spülkopfanordnung (50) nach einem der vorangehenden Ansprüche,
**dadurch gekennzeichnet, dass** die Spülkopfanordnung (50) frei von einem Durchflussregelventil ist und/oder die Förderpumpe (53) ausschließlich zum mechanischen Antrieb durch die Antriebswelle (77) ausgebildet ist.

7. Spülkopfanordnung (50) nach einem der vorangehenden Ansprüche,
**dadurch gekennzeichnet, dass** die Förderpumpe (53) ausgelegt ist, bei einer Drehzahl der Antriebswelle (77) zwischen 0 und 500 U/min die Spülflüssigkeit (W) mit wenigstens 1 L/min zu Fördern.

8. Handwerkzeugmaschine (100), insbesondere Kernbohrmaschine,
**gekennzeichnet durch** eine Spülkopfanordnung (50) nach einem der vorangehenden Ansprüche.

9. Handwerkzeugmaschine (100), nach Anspruch 9.
**dadurch gekennzeichnet, dass** die Spülkopfanordnung (50) in ein Gehäuse (90) der Handwerkzeugmaschine (100) integriert ist und die Förderpumpe (53) mit der Antriebswelle (77) der Handwerkzeugmaschine (100) gekoppelt ist.

10. Handwerkzeugmaschine (100), nach Anspruch 8 oder 9,
**dadurch gekennzeichnet, dass** das Gehäuse (90) eine Befestigungsaufnahme (95) für den Spülflüssigkeitsbehälter (200) aufweist, die bevorzugt auf der Oberseite des Gehäuses (90) angeordnet ist.
